# EUROPEAN PATENT SPECIFICATION

(11) **EP 3 718 457 B1**
(45) Date of publication and mention of the grant of the patent: **22.06.2022**
(21) Application number: 20165445.6
(22) Date of filing: 25.03.2020
(51) Int. Cl.: A47L 15/42, D06F 39/08, G01F 1/115

(54) **DEVICE TO FEED A FLUID TO A HOUSEHOLD APPLIANCE**
VORRICHTUNG ZUM ZUFÜHREN EINES FLUIDS ZU EINEM HAUSHALTSGERÄT
DISPOSITIF PERMETTANT D'ALIMENTER UN APPAREIL MÉNAGER EN FLUIDE

(30) Priority: 26.03.2019 IT 201900004385
(43) Date of publication of application: 07.10.2020
(73) Proprietor: Robertshaw Italy S.r.L., 24030 Terno d'Isola (BG) (IT)
(72) Inventor: Cattazzo, Donato, 20092 Cinisello Balsamo (IT); Rajaram, Madhavan, 20092 Cinisello Balsamo (IT); Corti, Paolo, 20874 Busnago (IT); Verzeroli, Marco, 24048 Treviolo (IT)
(74) Representative: Petraz, Gilberto Luigi

(56) References cited:
- EP-A1- 0 517 293
- EP-B1- 0 517 293
- WO-A1-2010/140096
- WO-A1-2017/064591
- CN-A- 101 871 801
- DE-U1-202006 005 400
- KR-A- 20040 014 754

## Description

### FIELD OF THE INVENTION

The present invention concerns a device to feed a fluid to a household appliance, for example to feed water to a washing machine, a dishwasher or suchlike.

### BACKGROUND OF THE INVENTION

It is known that there are devices to feed a fluid to a household appliance comprising one or more electro valves to adjust the flow of the fluid entering from an inlet pipe and exiting from one or more outlet pipes. The one or more outlet pipes are disposed inside the household appliance and flexible connection tubes, or other, can be connected to them. A connection tube of a source that supplies the fluid, for example a normal water network, is normally connected to the inlet pipe.

In the inlet pipe for the fluid there can be positioned a flow meter, that is, a meter for the volumetric flow rate of fluid entering the feed device, comprising a turbine provided with magnetic means which cooperate with a magnetic sensor positioned on an electronic board of the feed device. The electronic circuit provided with a magnetic sensor is disposed in proximity to the flow meter so that when the turbine is made to rotate by the passage of the fluid in the inlet pipe, the magnetic sensor can detect the impulse generated by the magnetic means of the turbine whenever they transit opposite it.

The signal of the flow meter is used by the control circuit to determine the flow rate. The control circuit feeds the valve for the amount of time necessary to guarantee the required flow rate in order to meet the needs of the user and avoid wasting water, and to guarantee a correct functioning of the household appliance or other.

Such devices are known for example from WO 2010/140096 A1.

One disadvantage of the known feed devices is that the quantity of water delivered through the outlet pipe or pipes is often not very precise and accurate, which can for example lead to waste of water or incorrect functioning of the household appliance, and this lack of precision or accuracy is mainly due to imprecise and inaccurate measurements by the magnetic sensor, which receives an imprecise or disturbed signal from the electromagnetic means positioned on the turbine.

One of the causes of the signal disturbance detected by the magnetic sensor in known feed devices is that the windings of the electro valve or valves often disturb the magnetic signal or pulse generated by the magnetic elements of the turbine when they transit opposite the magnetic sensor, therefore the signal detected is often not very precise or accurate.

Known solutions which, however, prove to be not very effective provide to position the windings of the electro valve or valves away from the magnetic sensor positioned on the electronic board, clearly leading to an increase in the overall bulk and complexity of the feed device.

Known devices to feed a fluid to a household appliance therefore prove to not be very precise and reliable, and have rather significant sizes considering the purposes for which they are designed, that is, to supply precise flow rates of fluid to a household appliance.

There is therefore the need to perfect a device to feed a flow of fluid to a household appliance that can overcome at least one of the disadvantages of the state of the art.

In particular, one purpose of the present invention is to provide a device to feed a fluid in which the detected signal is precise and reliable, so that a precise quantity of fluid is delivered through the outlet pipe or pipes of the feed device.

Another purpose of the present invention is to provide a device to feed a fluid to a household appliance in which the windings of the electro valve or valves of the feed device do not influence the signal detected by the magnetic sensor cooperating with the magnetic elements of the flow meter.

Another purpose of the present invention is to provide a device to feed a flow of fluid to a household appliance which is compact and therefore with a contained size.

Another purpose of the present invention is to provide a device to feed a flow of fluid that is reliable, precise and can be used in any household appliance whatsoever that requires a fluid to be fed to it, therefore a washing machine, a dishwasher or other.

The Applicant has devised, tested and embodied the present invention to overcome the shortcomings of the state of the art and to obtain these and other purposes and advantages.

### SUMMARY OF THE INVENTION

The present invention is set forth and characterized in the independent claim.

The dependent claims describe other characteristics of the invention or variants to the main inventive idea.

In accordance with the above purposes, a device to feed a fluid to a household appliance, comprises:
a main body provided with at least one inlet pipe for the fluid and at least one outlet pipe for the fluid;
at least one electro valve to adjust the flow rate of fluid exiting from the outlet pipe;
at least one flow meter provided with a turbine containing one or more magnetic elements and positioned in the inlet pipe;
and at least one electronic circuit provided with at least one magnetic sensor positioned in proximity to the flow meter and able to detect the passage of the one or more magnetic elements when the turbine is made to rotate by the passage of the fluid in the inlet pipe.

According to a characteristic aspect of the invention, magnetic shielding elements, made of metal material or suchlike, are positioned between the electro valve and the electronic circuit provided with a magnetic sensor cooperating with the one or more magnetic elements of the flow meter.

Advantageously, the present device to feed a fluid to a household appliance is substantially not affected by the electromagnetic fields caused by the one or more electro valves during their normal functioning to deliver the fluid from the one or more outlet pipes, thanks to the use of magnetic shielding elements positioned between the one or more electro valves and the electronic circuit where the magnetic sensor that detects the passage of the one or more magnetic elements of the flow meter is positioned.

In the present device to feed a fluid, therefore, the signal detected is precise and reliable, so that a precise quantity of fluid is delivered through the outlet pipe or pipes of the feed device.

According to another aspect of the invention, the magnetic shielding elements can comprise at least one shielding wall positioned between the electro valve and the inlet pipe of the fluid where the flow meter is positioned.

In some embodiments, the shielding wall can comprise an upper plate able to be positioned opposite the electro valve and interposed between the electro valve and the inlet pipe where the flow meter is positioned. The upper plate can be square or rectangular in shape.

The shielding wall can also comprise a lower plate in which an aperture is made by means of which it can be suitably positioned around the inlet pipe.

In some embodiments, the shielding wall can be substantially S-shaped, that is, with the upper plate and the lower plate lying on different planes and joined by a connecting segment.

According to other aspects of the invention, the magnetic shielding elements can comprise a support of the electronic circuit.

In some embodiments, the support can comprise a housing body in which an insertion seating for the electronic circuit is made, and a pair of arms that protrude from the housing body and position themselves on one side and the other of the inlet pipe.

The shielding wall can be positioned between the support of the electronic circuit and the electro valve.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a three-dimensional view of a device to feed a fluid to a household appliance according to the present invention;
- fig. 2 is a three-dimensional view of a part of the present feed device of fig. 1;
- fig. 3 is an exploded view of a flow meter of the present feed device;
- fig. 4 is a three-dimensional view of a turbine of the flow meter of fig. 3;
- fig. 5 is a schematic view that shows the reciprocal positioning of the flow meter and of a magnetic sensor positioned on an electronic circuit of the present feed device;
- fig. 6 is a three-dimensional view of a support for the electronic circuit of the present feed device;
- fig. 7 is a three-dimensional view of a magnetic shielding element, for example made of metallic material or suchlike.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

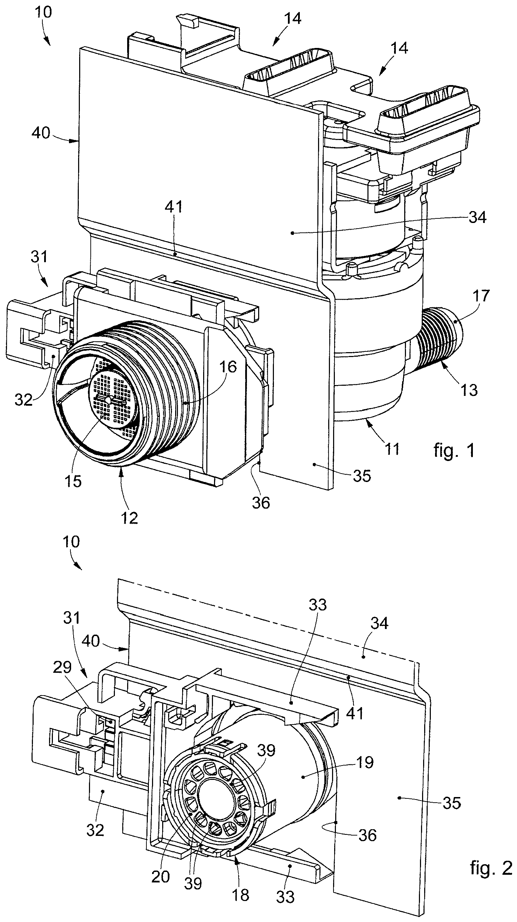

With reference to the attached drawings and in particular to fig. 1, a device 10 to feed a fluid according to the invention comprises a main body 11 provided with at least one inlet pipe 12, able to receive a fluid from an external source, and at least one outlet pipe 13, able to supply the fluid to a household appliance, such as a washing machine, a dishwasher or suchlike.

In the example shown, by way of a non-limiting example, the feed device 10 comprises two outlet pipes 13, one of which is visible in fig. 1. The flow of fluid from the outlet pipes 13 and therefore the flow rate of fluid exiting the feed device 10 are adjusted by electro valves, one for each of the outlet pipes 13. If only one outlet pipe 13 is provided, naturally, a single electro valve 14 will be provided.

The inlet pipe 12 is provided with at least one filter 15 to retain possible impurities of the fluid entering the feed device 10 and can be provided with a threaded external surface 16, so that it can be connected to a tube of an external source that feeds the fluid, for example a normal water network. The outlet pipe 13 comprises an external surface 17 suitable to be connected with an internal tube to the household appliance, for example a threaded surface.

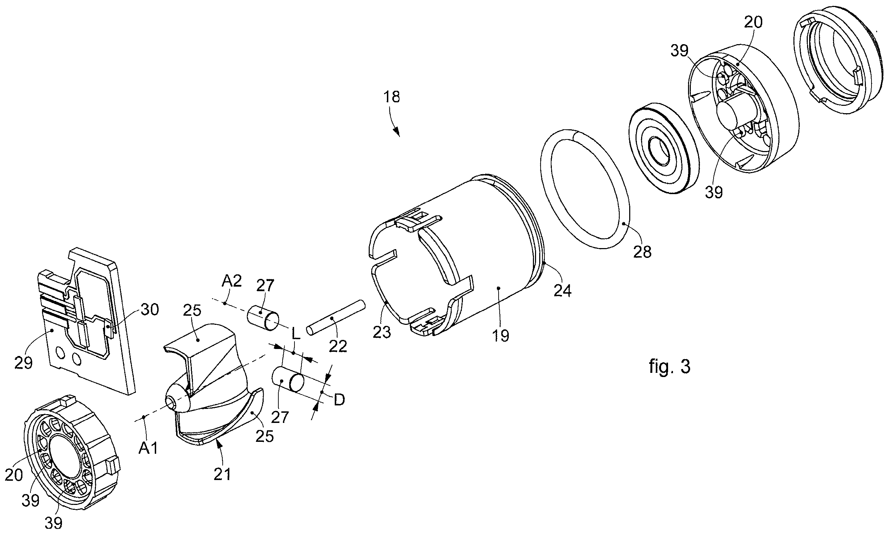

A flow meter 18, in particular a volumetric flow meter, is positioned in the inlet pipe 12, see also fig. 2 and fig. 3.

The flow meter 18 is housed inside a tubular element 19, for example with a cylindrical shape, which comprises an inlet end 23 for the fluid and an outlet end 24 for the fluid.

In correspondence with each of the ends 23 and 24, the tubular element 19 is provided with a disk 20 that has a series of holes 39 for the passage of the fluid.

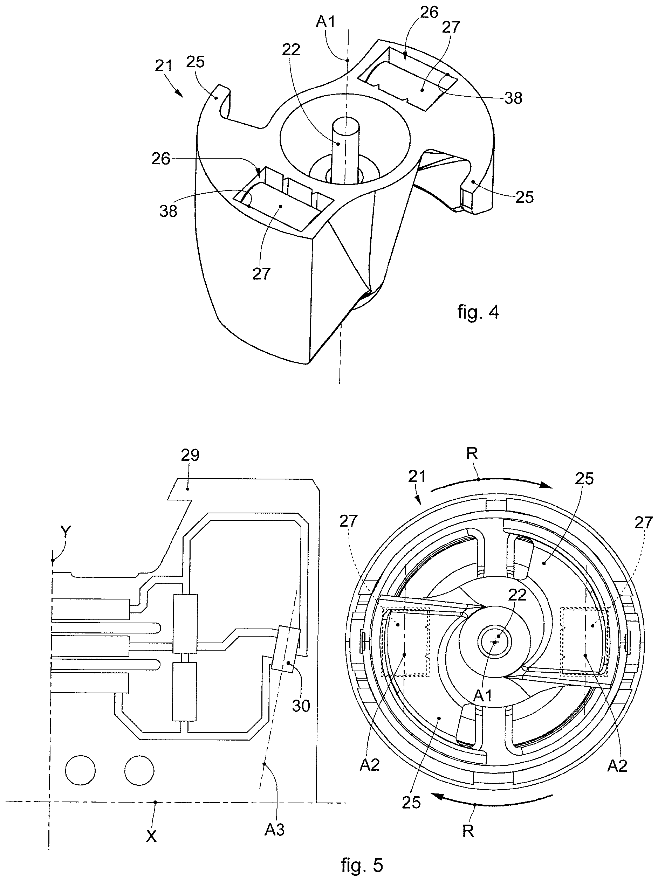

The flow meter 18 comprises a turbine 21, see also fig. 4 and fig. 5, provided with a shaft 22 around which it can rotate, for example in the direction R and around an axis of rotation A1, thanks to the flow that passes through the tubular element 19.

The turbine 21 comprises a series of blades 25, for example a pair of blades 25 made substantially on diametrically opposite positions with respect to the axis of rotation A1.

The turbine 21 comprises, in a radial direction and therefore offset with respect to the axis of rotation A1, one or more housing seatings 26 for a magnetic element 27. In the seating 26, ridges 37 can be made to retain the corresponding magnetic element 27 in position.

The housing seating 26 for the magnetic element 27 has an aperture 38 to insert the magnetic element 27 facing toward the outlet end 24 of the fluid from the inlet pipe 12.

In the example shown, the turbine 21 comprises two seatings 26 diametrically opposite the axis of rotation A1 and in each of which a magnetic element 27 is housed.

As can be seen, in each blade 25 there is made housing seating 26 for a magnetic element 27 which is therefore advantageously recessed or inserted retracted in the seating 26.

The magnetic element 27 is substantially of a cylindrical, prismatic, parallelepiped or similar shape. By way of example, the drawings show a cylindrical magnetic element 27.

In the cylindrical magnetic element 27 the ratio between the diameter D and the length L is comprised between 0.5 and 0.9 and preferably equal to about 0.7.

The magnetic element 27 comprises a longitudinal axis A2 which is substantially directed in a direction tangent to the direction of rotation R of the turbine 21.

The longitudinal axis A2 of the magnetic element 27 is also preferably orthogonal to the axis of rotation A1 of the turbine 21.

The flow meter 18 also comprises hydraulic seal gaskets, see for example the gasket 28.

An electronic circuit 29 is positioned in proximity to the turbine 21 and is provided with a magnetic sensor 30.

The magnetic sensor 30, see in particular fig. 5, is inclined toward the turbine 21 and therefore toward the magnetic element 27 which on each occasion is presented in front of it. Substantially, therefore, the magnetic sensor 30 is directed along an axis A3 inclined with respect to the longitudinal axis A2 of the magnetic element, when the latter is presented in front of the magnetic sensor 30, as shown schematically in fig. 5.

The axis A3 of the magnetic sensor 30 is also inclined with respect to two axes X and Y, orthogonal to each other, of the electronic circuit 29.

It has been proven through experiments that providing a magnetic sensor 30 inclined toward the turbine 21 and therefore toward the magnetic element 27, allows to obtain an extremely defined pulse or signal with a suitable length, for example greater than about 2 ms, whenever the magnetic element 27 transits opposite the magnetic sensor 30, without the need to provide additional signal processing circuits. The electronic circuit 29 of the present feed device 10 is in fact extremely compact.

It has also been proven through experiments that a magnetic element 27 with a cylindrical or parallelepiped, prismatic or similar shape, housed in a seating 26 positioned in a radial direction and therefore offset with respect to the axis of rotation A1 of the turbine 21, guarantees a clean and prolonged signal, without the need for additional signal processing circuits.

It has also been proven through experiments that a cylindrical magnetic element 27 in which the diameter D and the width L is comprised between 0.5 and 0.9 and preferably equal to about 0.7, allows to further perfect the present feed device 10 and therefore to obtain a clean and prolonged signal, without the need for additional signal processing circuits.

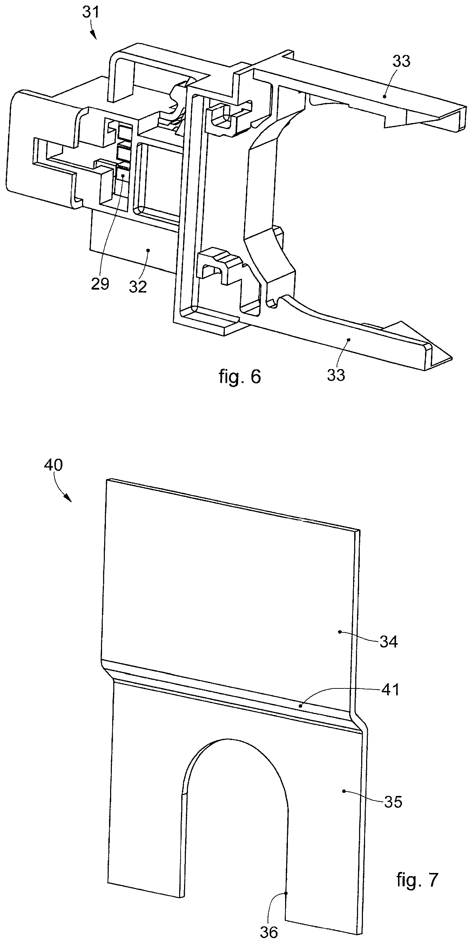

The electronic circuit 29 is housed in a support 31, see fig. 6, which comprises a housing body 32 where a seating for inserting the electronic circuit 29 is made. Two arms 33 extend from the housing body 32, which position themselves on one side and on the other of the inlet pipe 12 of the present feed device 10.

The support 31 is preferably made of metallic or similar material and therefore it is configured as a magnetic shielding element, therefore able to protect the magnetic sensor 30 and the one or more magnetic elements 27 of the flow meter 18 from the influence of the magnetic fields produced by the windings of one or more electro valves 14.

The present feed device 10 can be provided with other magnetic shielding elements, in particular a shielding wall 40, see fig. 7, which is positioned between the flow meter 18 which cooperates with the magnetic sensor 30 and the one or more electro valves 14. The shielding wall 40 is made of metallic or similar material.

The shielding wall 40 can comprise an upper plate 34 able to be positioned between the electro valves and the inlet pipe 12 where the flow meter 18 is housed.

The upper plate 34 is preferably of a substantially square or rectangular shape.

The shielding wall 40 also comprises a lower plate 35 in which an aperture 36 is made, by means of which the shielding wall 40 can be suitably positioned around the inlet pipe 12.

The shielding wall 40, in particular, is positioned between the support 31 and the one or more electro valves 14. This positioning proves to be extremely useful and effective as an additional protection, even if the support 31 is itself configured as a shielding element, as mentioned above.

The shielding wall 40, in order to be positioned with even greater precision and efficiency in the present drive device, can be made substantially S-shaped, that is, with the upper plate 34 and the lower plate 35 lying on different planes, as can be seen in fig. 7, and joined by means of a connection segment 41.

It is clear that modifications and/or additions of parts may be made to the device to feed a fluid to a household appliance as described heretofore, without departing from the field and scope of the present invention.

It is also clear that, although the present invention has been described with reference to some specific examples, a person of skill in the art shall certainly be able to achieve many other equivalent forms of device to feed a fluid to a household appliance, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Device to feed a fluid to a household appliance, comprising:
a main body (11) provided with at least one inlet pipe (12) for the fluid and at least one outlet pipe (13) for the fluid;
at least one electro valve (14) to adjust the flow rate of fluid exiting from said outlet pipe (13);
at least one flow meter (18) provided with a turbine (21) containing one or more magnetic elements (27) and positioned in said inlet pipe (12);
and at least one electronic circuit (29) provided with at least one magnetic sensor (30) positioned in proximity to said flow meter (18) and able to detect the passage of said one or more magnetic elements (27) when the turbine (21) is made to rotate by the passage of the fluid in said inlet pipe (12),
said feed device being **characterized in that** magnetic shielding elements (31, 40), made of metal material or suchlike, are positioned between said electro valve (14) and said electronic circuit (29) provided with the magnetic sensor (30) cooperating with said one or more magnetic elements (27) of the flow meter (18).

2. Feed device as in claim 1, **characterized in that** said magnetic shielding elements comprise at least one shielding wall (40) positioned between said electro valve (14) and said inlet pipe (12) of the fluid where the flow meter (18) is positioned.

3. Feed device as in claim 2, **characterized in that** said shielding wall (40) comprises an upper plate (34) able to be positioned opposite the electro valve (14) and interposed between said electro valve (14) and the inlet pipe (12) where the flow meter (18) is positioned.

4. Feed device as in claim 3, **characterized in that** said upper plate (34) is square or rectangular in shape.

5. Feed device as in claim 2, **characterized in that** said shielding wall (40) comprises a lower plate (35) in which an aperture (36) is made by means of which it can be suitably positioned around the inlet pipe (12).

6. Feed device as in claims 3 and 5, **characterized in that** said shielding wall (40) is substantially S-shaped, that is, with the upper plate (34) and the lower plate (35) lying on different planes and joined by a connecting segment (36).

7. Feed device as in claim 1, **characterized in that** said magnetic shielding elements comprise a support (31) of the electronic circuit (29).

8. Feed device as in claim 7, **characterized in that** said support (31) comprises a housing body (32) in which an insertion seating for the electronic circuit (29) is made, and a pair of arms (33) that protrude from said housing body (32) and position themselves on one side and the other of the inlet pipe (12).

9. Feed device as in claims 2 and 7, **characterized in that** said shielding wall (40) is positioned between said support (31) of the electronic circuit (29) and said electro valve.

## Patentansprüche

1. Zuführvorrichtung zum Zuführen eines Fluides zu einem Haushaltsgerät, umfassend:
- einen Hauptkörper (11) mit wenigstens einem Einlassrohr (12) für das Fluid und wenigstens einem Auslassrohr (13) für das Fluid;
- wenigstens ein Elektroventil (14) zum Einstellen der Durchflussmenge des aus dem Auslassrohr (13) austretenden Fluides;
- wenigstens einen Durchflusssensor (18) mit einer Turbine (21), die ein oder mehrere magnetische Elemente (27) aufweist und im Einlassrohr (12) angeordnet ist;
- und wenigstens eine elektronische Schaltung (29) mit wenigstens einem magnetischen Sensor (30), der in der Nähe des Durchflusssensors (18) angeordnet und dazu konfiguriert ist, den Durchgang des einen oder der mehreren magnetischen Elemente (27) zu erfassen, wenn die Turbine (21) durch den Durchfluss des Fluides in der Einlassrohr (12) in Drehung versetzt wird,
**dadurch gekennzeichnet, dass**
magnetische Abschirmelemente (31, 40) aus metallischem Werkstoff oder dergleichen zwischen dem Elektroventil (14) und der elektronischen Schaltung (29) mit dem magnetischen Sensor (30), der mit dem einen oder den mehreren magnetischen Elementen (27) des Durchflusssensors (18) zusammenwirkt, angeordnet sind.

2. Zuführvorrichtung nach Anspruch 1
**dadurch gekennzeichnet, dass**
die magnetischen Abschirmelemente wenigstens eine Abschirmwand (40) aufweisen, die zwischen dem Elektroventil (14) und dem Einlassrohr (12) für das Fluid, das den Durchflusssensor (18) umfasst, angeordnet ist.

3. Zuführvorrichtung nach Anspruch 2
**dadurch gekennzeichnet, dass**
die Abschirmwand (40) eine obere Platte (34) aufweist, die zur Ausrichtung gegenüber dem Elektroventil (14) und zur Anordnung zwischen dem Elektroventil (14) und dem Einlassrohr (12), das den Durchflusssensor (18) umfasst, angepasst ist.

4. Zuführvorrichtung nach Anspruch 3
**dadurch gekennzeichnet, dass**
die obere Platte (34) eine quadratische oder rechteckige Form aufweist.

5. Zuführvorrichtung nach Anspruch 2
**dadurch gekennzeichnet, dass**
die Abschirmwand (40) eine untere Platte (35) umfasst, in der eine Öffnung (36) ausgebildet ist, mittels der sie in geeigneter Weise um das Einlassrohr (12) herum angeordnet werden kann.

6. Zuführvorrichtung nach Anspruch 3 und 5
**dadurch gekennzeichnet, dass**
die Abschirmwand (40) im Wesentlichen S-förmig derart ausgebildet ist, dass die obere Platte (34) und die untere Platte (35) in unterschiedlichen Ebenen liegen und durch ein Verbindungssegment (41) verbunden sind.

7. Zuführvorrichtung nach Anspruch 1
**dadurch gekennzeichnet, dass**
die magnetischen Abschirmelemente eine Halterung (31) für die elektronische Schaltung (29) umfassen.

8. Zuführvorrichtung nach Anspruch 7
**dadurch gekennzeichnet, dass**
die Halterung (31) ein Gehäuse (32), in dem ein Einführungssitz für die elektronische Schaltung (29) ausgebildet ist, und ein Paar Arme (33), die aus dem Gehäuse (32) hinausragen und auf der einen und der anderen Seite des Einlassrohrs (12) angeordnet sind, umfasst.

9. Zuführvorrichtung nach Anspruch 2 und 7
**dadurch gekennzeichnet, dass**
die Abschirmwand (40) zwischen der Halterung (31) für die elektronische Schaltung (29) und dem Elektroventil angeordnet ist.

## Revendications

1. Dispositif d'alimentation en fluide d'un appareil électroménager comprenant :
un corps principal (11) muni d'au moins une tubulure d'entrée (12) du fluide et d'au moins une tubulure de sortie (13) du fluide ;
au moins une électrovanne (14) pour régler le débit de fluide sortant dudit tuyau de sortie (13) ;
au moins un débitmètre (18) muni d'une turbine (21) contenant un ou plusieurs éléments magnétiques (27) et positionné dans ladite conduite d'admission (12) ;
et au moins un circuit électronique (29) muni d'au moins un capteur magnétique (30) positionné à proximité dudit débitmètre (18) et apte à détecter le passage desdits un ou plusieurs éléments magnétiques (27) lorsque la turbine (21) est mise en rotation par le passage du fluide dans ladite tubulure d'entrée (12),
ledit dispositif d'alimentation étant **caractérisé en ce que** des éléments de blindage magnétique (31, 40), en matériau métallique ou similaire, sont positionnés entre ladite électrovanne (14) et ledit circuit électronique (29) muni du capteur magnétique (30) coopérant avec lesdits un ou plusieurs éléments magnétiques (27) du débitmètre (18).

2. Dispositif d'alimentation selon la revendication 1, **caractérisé en ce que** lesdits éléments de blindage magnétique comprennent au moins une paroi de blindage (40) positionnée entre ladite électrovanne (14) et ladite conduite d'entrée (12) du fluide où le débitmètre (18) est positionné.

3. Dispositif d'alimentation selon la revendication 2, **caractérisé en ce que** ladite paroi de blindage (40) comprend une plaque supérieure (34) apte à être positionnée en regard de l'électrovanne (14) et interposée entre ladite électrovanne (14) et la tubulure d'entrée (12) où est positionné le débitmètre (18).

4. Dispositif d'alimentation selon la revendication 3, **caractérisé en ce que** ladite plaque supérieure (34) est de forme carrée ou rectangulaire.

5. Dispositif d'alimentation selon la revendication 2, **caractérisé en ce que** ladite paroi de blindage (40) comprend une plaque inférieure (35) dans laquelle est pratiquée une ouverture (36) au moyen de laquelle elle peut être convenablement positionnée autour de la tubulure d'entrée (12).

6. Dispositif d'alimentation selon les revendications 3 et 5, **caractérisé en ce que** ladite paroi de blindage (40) est sensiblement en forme de S, c'est-à-dire avec la plaque supérieure (34) et la plaque inférieure (35) s'étendant dans des plans différents et jointes par un segment de liaison (41).

7. Dispositif d'alimentation selon la revendication 1, **caractérisé en ce que** lesdits éléments de blindage magnétique comprennent un support (31) du circuit électronique (29).

8. Dispositif d'alimentation selon la revendication 7, **caractérisé en ce que** ledit support (31) comprend un corps de boîtier (32) dans lequel est réalisé un siège d'insertion pour le circuit électronique (29), et une paire de bras (33) qui font saillie depuis ledit corps de boîtier (32) et se positionnent de part et d'autre de la tubulure d'entrée (12).

9. Dispositif d'alimentation selon les revendications 2 et 7, **caractérisé en ce que** ladite paroi de blindage (40) est positionnée entre ledit support (31) du circuit électronique (29) et ladite électrovanne.
